# EUROPÄISCHE PATENTSCHRIFT

(11) **EP 3 446 669 B1**
(45) Veröffentlichungstag und Bekanntmachung des Hinweises auf die Patenterteilung: **29.07.2020**
(21) Anmeldenummer: 17187965.3
(22) Anmeldetag: 25.08.2017
(51) Int. Cl.: A61G 5/04, A61G 5/10, A61G 5/06, A61G 5/12, B62K 11/00

(54) **STÜTZSYSTEM FÜR EINEN ELEKTRONISCH SELBSTBALANCIERTEN ROLLSTUHL**
SUPPORT SYSTEM FOR AN ELECTRONICALLY SELF-BALANCING WHEELCHAIR
SYSTÈME DE SUPPORT POUR UN FAUTEUIL ROULANT ÉLECTRIQUE AUTO-ÉQUILIBRÉ

(43) Veröffentlichungstag der Anmeldung: 27.02.2019
(73) Patentinhaber: Rigler, Lukas, 4391 Waldhausen (AT)
(72) Erfinder: Rigler, Lukas, 4391 Waldhausen (AT)
(74) Vertreter: Ellmeyer, Wolfgang

(56) Entgegenhaltungen:
- WO-A1-2016/001451
- DE-A1-102015 217 341
- JP-A- 2007 186 184
- US-A1- 2010 114 421
- US-A1- 2010 305 841
- US-A1- 2011 035 101

## Beschreibung

Die Erfindung betrifft einen elektronisch selbstbalancierten Rollstuhl, der mit mindestens zwei motorisch angetriebenen Rädern und einer für die Balance, den Antrieb und die Steuerung des Rollstuhls zuständigen Hauptsteuereinrichtung für die motorisch angetriebenen Räder im Balance- und/oder Drehzahlmodus sowie einem Stützsystem ausgestattet ist, das Stützsystem umfassend mindestens eine erste Stützeinrichtung, die in zumindest einige Positionen zwischen einer komplett eingefahrenen und einer komplett ausgefahrenen Stellung verfahrbar ist, wobei die Stützeinrichtung mit einem Bodenkontaktelement sowie einem Antrieb für das Verfahren der Stützeinrichtung versehen ist, wobei die Hauptsteuereinrichtung eine Stützsteuereinrichtung beinhaltet und die Hauptsteuereinrichtung ausgelegt ist, um zumindest einen Teil von deren Steuersignalen und Kontrollsignalen für die Balance, den Antrieb und die Steuerung des Rollstuhls auch an die Stützsteuereinrichtung zu übergeben, wobei gegebenenfalls Bedienungselemente zur direkten Eingabe von Steuerbefehlen in die Stützsteuereinrichtung am Stützsystem oder am Rollstuhl positioniert sind, und wobei die Stützsteuereinrichtung ausgelegt ist, um in Abhängigkeit von den Steuersignalen, Kontrollsignalen und allfälligen Steuerbefehlen zumindest eine Stützeinrichtung zumindest teilweise auszufahren bzw. wieder einzufahren.

Herkömmliche Rollstühle sind eigenstabil und benötigen daher keine gesonderte Abstützung. Oftmals sind zusätzlich stationäre Stützen verbaut welche jedoch nicht aktiv gesteuert werden. Diese bieten meist lediglich einen Kippschutz.

Selbstbalancierende Rollstühle bedürfen einer mechanischen Abstützung, weil diese bei Deaktivierung des Antriebssystems kippen würden. Beispielsweise offenbart die DE102014113278A1 ein derartiges Stützsystem, bei welchem die Stützeinrichtung über einen Linearantrieb bewegbar ist. Ein Sensor ist zur Bestimmung einer Kontaktierung der Stützeinrichtung mit dem Untergrund vorgesehen.

In der DE202015105515U1 ist ein Rollstuhl beschrieben, mit einer Fahrzeugeinheit, die eine Steuereinrichtung zur Steuerung eines Fahrzeugantriebs aufweist. Diese ist dazu eingerichtet, eine Plattform des Rollstuhls im Wesentlichen horizontal auszurichten. Weiters ist eine elektrisch ansteuerbare Stützeinrichtung vorhanden, die wenigstens eine vorne an der Fahrzeugeinheit angeordnete Frontstütze und wenigstens eine hinten an der Fahrzeugeinheit angeordnete Heckstütze aufweist, die durch jeweils einen separaten elektrisch ansteuerbaren Stützenantrieb ein- und ausfahrbar sind. Ähnliche Lösungen mit unterschiedlichen aber jeweils beschränkten Arten der Ansteuerung sind in der EP2606867A1 oder der WO2012017335A1 offenbart. All diese Systeme sind wenig dynamisch und weisen eine nur beschränkte Kommunikation zwischen Stützeinrichtung und Fahrzeug auf. Weiters sind diese Systeme dafür ausgelegt, dass der Nutzer die Stützen eigens aktivieren muss. All diese Stützeinrichtungen erkennen den Zustand des Fahrzeuges nur bedingt und lösen nicht automatisch aus.

Das Stützsystem der EP0912154B1 ist als reines Notsystem für den Fall gedacht, dass ein an sich selbstbalancierter Rollstuhl ins Kippen kommt. In einer derartigen Situation wird als reines Notabstützsystem eine Stützeinrichtung auf jeweils der Seite rasch in eine vorgegebene Maximalstellung ausgefahren, in welche die Kippbewegung hin erfolgt.

Ausgangspunkt der Erfindung ist also ein Stützsystem für einen Rollstuhl, der mit mindestens zwei motorisch angetriebenen Rädern und einer für die Balance, den Antrieb und die Steuerung des Rollstuhls zuständigen Hauptsteuereinrichtung für die motorisch angetriebenen Räder im Balance- und/oder Drehzahlmodus ausgestattet ist. Dessen Stützsystem umfasst mindestens eine erste Stützeinrichtung, die in zumindest einige Positionen zwischen einer komplett eingefahrenen und einer komplett ausgefahrenen Stellung verfahrbar ist, wobei die Stützeinrichtung mit einem Bodenkontaktelement versehen ist, sowie einem Antrieb für das Verfahren der Stützeinrichtung.

Aus der US 2010/0114421 A1 ist ein Rollstuhl bekannt, bei dem mit Hilfe von Stützrädern die Verkippung der Rollstuhlhochachse bei Beschleunigungsvorgängen verringert werden kann. Wenn eine gemessene Beschleunigung einen Schwellenwert überschreitet, werden die Stützräder mit dem Boden in Eingriff gebracht. Jedes Stützrad weist dabei eine dreieckförmige Aufhängung mit zwei Stabaktuatoren auf, die eine Verlagerung des Stützrades vor oder hinter die Rollstuhlantriebsräder bewirken können. Dabei ergeben sich relativ lange, erforderliche Betätigungszeiten, welche durch die Funktionsweise und Masse der Stabaktuatoren bedingt sind.

Die Stützräder des in der US 2010/0305841 A1 gezeigten Rollstuhls sind durch einfache Schwenkarme ausfahrbar. Zur Erreichung der erforderlichen Stabilität sind relativ massive Schwenkarme erforderlich, die wiederum in relativ langen Betätigungszeiten resultieren.

In ähnlicher Weise sind In den Dokumenten WO 2016/001451 A1, JP 2007 18184 A und US 2011/035101 A1 derartige einfache Schwenkarme für Stützräder beschrieben, die relativ lange Betätigungszeiten aufweisen und daher bei raschen Bewegungen des Rollstuhls ihre Funktion nur in begrenztem Ausmaß entfalten können. Die Aufgabe der Erfindung war einen Rollstuhl mit einfacher und flexibler Betätigungsmöglichkeit der Stützeinrichtung zu schaffen, welches auch in der Anwendung und für den Einsatz des Rollstuhls eine erhöhte Flexibilität und Sicherheit bietet.

Zur Lösung dieser Aufgabe ist der Rollstuhl dadurch gekennzeichnet, dass die Stützeinrichtung ein als Rad ausgeführtes Bodenkontaktelement und Lenker umfasst, die eine Parallelogramm-Aufhängung einer Stütze ausbilden, an deren bodenseitigem Ende die Achse des als Rad ausgeführten Bodenkontaktelements angeordnet ist, wobei ein Antriebselement zur Verschwenkung der Parallelgramm-Aufhängung vorgesehen ist.

Die erfindungsgemäße Parallelogramm-Aufhängung weist Vorteile hinsichtlich schneller Ausfahrgeschwindigkeit und stabiler Bauweise gegenüber den aus dem Stand der Technik bekannten Rollstuhl-Stützeinrichtungen auf. Damit ist eine sehr flexible Betätigung der Stützeinrichtungen möglich, welche je nach Bedarf und Situation entweder durch den Benutzer oder durch den Rollstuhl selbst betätigt werden kann. Auch ein Mischbetrieb mit wählbarer Aufteilung der Gewichtung von Benutzereingaben bzw. Rollstuhlsteuerung ist möglich. Die Ausfahrgeschwindigkeit variiert dabei vorzugsweise je nach Bedarf. Bei normalem Stopp durch Benutzereingabe fahren die Stützen typischerweise langsam aus. Verliert das Gerät jedoch seine Balance, die Traktion oder tritt ein Fehler auf, der die ordnungsgemässe Funktion des automatischen Balance- und Fahrsystems gefährdet, wird das Stützsystem automatisch und mit hoher Geschwindigkeit ausgefahren, um derart ein Kippen bzw. einen Sturz sicher zu verhindern. Die Stützsteuereinrichtung kann als Teil der Hauptsteuereinrichtung ausgeführt sein, insbesondere als Unterprogramm im Steuerprogramm des Fahrzeuges bzw. als Schaltungsabschnitt einer fest verdrahteten umfassenden elektronischen Schaltungsanordnung.

Gemäß einer weiteren Ausführungsform der Erfindung kann der Rollstuhl eine tragende Struktur aufweisen, wobei das als Rad ausgeführte Bodenkontaktelement in der eingefahrenen Stellung soweit zurückgezogen ist, dass es im Wesentlichen vollständig innerhalb der Begrenzungen der tragenden Struktur liegt und die Neigung und andere Bewegungen des Rollstuhls nicht behindert, und dass die tragende Struktur Befestigungslaschen für die Stützenanordnung sowie die Lenker der Parallelogramm-Aufhängung der Stütze aufweist, die um Schwenkachsen verschwenkbar an den Befestigungslaschen angelenkt sind, wobei die Schwenkachsen im Wesentlichen parallel zur Achse des Rades am bodenseitigen Ende der Stütze angeordnet sind, wobei einer der beiden Lenker, vorzugsweise der untere Lenker, sich an der Außenseite der Befestigungslaschen vorzugsweise in gerader Linie in zumindest einem Antriebshebel fortsetzt, an dessen Ende das Antriebselement zur Verschwenkung des zumindest einen Antriebshebels und damit der gesamten Parallelgramm-Anordnung angreift.

In weiterer Fortbildung der Erfindung kann vorgesehen sein, dass der untere Lenker sich an der Außenseite der Befestigungslaschen in gerader Linie an beiden Seiten der Achse des unteren Lenkers in parallelen Antriebshebeln fortsetzt, an deren miteinander querverbundenen Enden das Antriebselement angreift.

Gemäß einem weiteren Ausführungsbeispiel der Erfindung kann vorgesehen sein, dass das Antriebselement eine Gewindespindel eines elektronisch über die Stützsteuereinrichtung ansteuerbaren Antriebsmotors ist.

In einer weiteren erfindungsgemäßen Ausführungsform kann der Antriebsmotor an den Befestigungslaschen oder an daran vorgesehenen Verlängerungen schwenkbar befestigt sein, um den Bewegungen der Gewindespindel und des Antriebshebels zu folgen.

Bevorzugt ist dabei eine von der Hauptsteuereinrichtung unterschiedene Stützsteuereinrichtung vorhanden, sowie eine Schnittstelle zur Verbindung der Hauptsteuereinrichtung und der Stützsteuereinrichtung, wobei die Schnittstelle ausgelegt ist, um aus der Hauptsteuereinrichtung zumindest einen Teil von deren Steuersignalen und Kontrollsignalen für die Balance, den Antrieb und die Steuerung des Rollstuhls auch an die Stützsteuereinrichtung zu übergeben. Durch diese Aufteilung der Steuerfunktionen für den normalen Betrieb des Fahrzeuges auf eine physische Einheit und der Stützsteuerfunktionen auf eine davon unterschiedene, andere physische Einheit kann eine erhöhte Sicherheitsstufe gewährleistet werden, da selbst bei Ausfall bzw. Störung der Hauptsteuereinrichtung die Stützeinrichtung weiter funktionsfähig bleibt, allein über die Stützsteuereinrichtung betätigt und somit ein instabiler Zustand des Rollstuhls verhindert werden kann.

Gemäss einer weiteren Ausführungsform der Erfindung sind zumindest zwei Stützeinrichtungen vorhanden, wobei zumindest ein Bodenkontaktelement einer Stützeinrichtung in Fahrtrichtung gesehen vor der Achse und zumindest ein weiteres Bodenkontaktelement einer weiteren Stützeinrichtung hinter der Achse angeordnet ist. Vorzugsweise stimmt die Stützsteuereinrichtung das Ausfahren der vor und hinter der Achse befindlichen Stützeinrichtungen derart ab, dass eine vordefinierte Lage des Rollstuhls zur Vertikalen eingestellt wird. Mit einer derartigen Ausführung kann die Stabilität bei ausgefahrenen Stützeinrichtungen weiter erhöht werden, da instabile Bewegungen um die Antriebsachse des Rollstuhls in beiden Drehrichtungen verhindert werden können.

Gemäss einer vorteilhaften Ausführung der Erfindung ist jedes Bodenkontaktelement mit einer Sensoranordnung zur Rückmeldung von Bodenkontakt und/oder des Abstandes vom Boden verbunden. Damit ist ein sicherer Betrieb des Rollstuhls auch auf Untergründen mit geringer oder wechselnder Traktion möglich, indem ein plötzliches Kippen oder Wegrutschen rasch und sanft durch die Stützeinrichtung abgefangen werden kann.

Zur erhöhten Sicherheit im Betrieb des Rollstuhls trägt eine Ausführungsform bei, bei welcher eine Überwachungsschaltung für die Schnittstelle zur Verbindung der Hauptsteuereinrichtung und der Stützsteuereinrichtung ausgelegt ist, um bei Feststellung einer Störung der ordnungsgemäßen Verbindung die oder jede Stützeinrichtung auszufahren.

Eine weitere Ausführungsform der Erfindung ist dadurch gekennzeichnet, dass zumindest ein Bedienungselement oder eine Stellung eines Bedienungselementes zur direkten Eingabe von Steuerbefehlen in die Stützsteuereinrichtung vorgesehen ist, welches ein rasches Ausfahren der Stützeinrichtungen bis zum Bodenkontakt auslöst. Der Benutzer kann damit selbst und sehr rasch durch manuelle Aktivierung der Stützeinrichtung auf eine Notsituation reagieren.

Um beispielsweise bei sich langsam ankündigenden instabilen Betriebszuständen den Rollstuhl zu stabilisieren, etwa bei in Kürze leer werdenden Akkus, bei aktiver Beendigung der Benutzung des Rollstuhls, od. dgl., ist eine Ausführungsform des erfindungsgemässen Stützsystems mit zumindest einem Bedienungselement oder einer Stellung eines Bedienungselementes zur direkten Eingabe von Steuerbefehlen in die Stützsteuereinrichtung vorgesehen, welches ein langsames Ausfahren der Stützeinrichtungen bis zum Bodenkontakt auslöst.

Besonders bevorzugt ist dabei ein Stützsystem, dessen Hauptsteuereinrichtung ausgelegt ist, um kritische Zustände (leerer Akku od. dgl.) an die Schnittstelle zu melden und den Rollstuhl zum Stillstand bringt, und dessen Stützsteuereinrichtung ausgelegt ist, um bei Meldung kritischer Zustände ein langsames Ausfahren der Stützeinrichtungen bis zum Bodenkontakt auszulösen. Notfallsituationen können dadurch sicher bewältigt werden, indem die Hauptsteuereinrichtung erfindungsgemäss derart ausgelegt ist, um kritische Zustände mit möglichem Balanceverlust (Motorüberlast, Traktionsverlust, etc.) an die Schnittstelle zu melden, und die Stützsteuereinrichtung ausgelegt ist, um bei Meldung dieser kritischen Zustände ein schnelles Ausfahren der Stützeinrichtungen bis zum Bodenkontakt auszulösen.

Eine weitere vorteilhafte Ausführungsform des Stützsystems gemäss der Erfindung ist dadurch gekennzeichnet, dass die Hauptsteuereinrichtung ausgelegt ist, um traktionsarme Untergründe zu erkennen, in Drehzahlbetrieb umzuschalten und dies an die Schnittstelle zu melden, und die Stützsteuereinrichtung ausgelegt ist, um bei Meldung traktionsarmer Untergründe ein Ausfahren der Stützeinrichtungen bis kurz vor Bodenkontakt auszulösen. Der Begriff "Drehzahlbetrieb" beschreibt einen Betriebsmodus, bei welchem die Geschwindigkeit des Fahrzeuges allein über ein Eingabeelement wie etwa einen Joystick gesteuert wird. Damit ist ein sicherer Betrieb des Rollstuhls auch auf Untergründen mit geringer oder wechselnder Traktion möglich, indem ein plötzliches Kippen oder Wegrutschen rasch durch die Stützeinrichtung abgefangen werden kann.

Eine weitere Ausführungsform der Erfindung weist zumindest ein Bedienungselement oder eine Stellung eines Bedienungselementes zur direkten Eingabe von Steuerbefehlen in die Stützsteuereinrichtung auf, welches ein Ausfahren der Stützeinrichtungen bis kurz vor Bodenkontakt auslöst.

Eine weitere vorteilhafte Variante der Erfindung ist dadurch gekennzeichnet, dass zumindest ein Bedienungselement oder eine Stellung eines Bedienungselementes zur direkten Eingabe von Steuerbefehlen in die Stützsteuereinrichtung vorgesehen ist, welches ein langsames Ausfahren der Stützeinrichtungen bis zum Bodenkontakt auslöst und bei weiterer Aktivierung des Antriebs des Rollstuhls auch den Antrieb der Stützeinrichtungen weiter aktiviert. Der Vorteil dieser Ausführungsform liegt darin, dass damit auch Hindernisse oder Stufen zu bewältigen sind, die im normalen Betrieb nicht überwunden werden könnten. Durch die Aktivierung der Stützen gleichzeitig mit dem Antrieb des Rollstuhls helfen diese Stützen mit den Rollstuhl am Hindernis entlang hochzudrücken und derart dieses Hindernis mit Hilfe der zusätzlichen Antriebskraft der Stützeinrichtung zu überwinden.

Um einen sicheren Schiebebetrieb des Rollstuhls ohne Antriebsleistung zu ermöglichen, ist das Stützsystem optional derart ausgelegt, dass zumindest ein Bedienungselement oder eine Stellung eines Bedienungselementes zur direkten Eingabe von Steuerbefehlen in die Stützsteuereinrichtung vorgesehen ist, welches ein langsames Ausfahren der Stützeinrichtungen bis kurz vor Bodenkontakt auslöst und anschliessend den Antrieb des Rollstuhls ausschaltet.

Um auch bei ausgefahrenen Stützen eine möglichst ungehinderte Beweglichkeit des Rollstuhls bei gewährleisteter Stabilität zu bieten, ist das Bodenkontaktelement als Stützrad oder Gleitkufe ausgebildet ist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Insbesondere kann eine vorteilhafte Eingliederung eines Systems vorgenommen werden, bei welcher zumindest eine der beiden vorhandenen Steuereinrichtungen ausgelegt ist, um einerseits eine Neigung der Hochachse des Rollstuhls gegenüber einer Referenzlage und andererseits eine Betätigung zumindest einer der Eingabevorrichtungen in einer frei wählbaren Gewichtung und/oder einer frei wählbaren Aufteilung in Steuerbefehle für die Balance, den Antrieb und die Steuerung des Rollstuhls als auch in eine Betätigung des Stützsystems des Rollstuhls oder jedes anderen mit diesen Systemen ausgestatteten Fahrzeuges umzusetzen.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine Seitenansicht eines erfindungsgemässen Rollstuhls mit eingefahrenen Stützen, für den Normalbetrieb,
- Fig. 2: eine Seitenansicht des Rollstuhls der Fig. 1, nun mit ausgefahrenen Stützen,
- Fig. 3: eine perspektivische Ansicht des Rollstuhls der Fig. 1,
- Fig. 4: eine perspektivische Ansicht des Rollstuhls der Fig. 2,
- Fig. 5: eine Seitenansicht eines Rollstuhls, mit Steuerung durch Gewichtsverlagerung des Benutzers,
- Fig. 6: den Rollstuhl der Fig. 5, mit ausgefahrenen Stützen nach Traktionsverlust,
- Fig. 7: eine Abfolge von Abbildungen bei Überquerung von Bodenunebenheiten, mit Sicherung mittels der ausgefahrenen Stützen,
- Fig. 8: eine Abfolge von Abbildungen bei Erklimmen einer Stufe oder Fahrbahnkante, Unterstützung des Normalbetriebs durch Anheben mit Hilfe der Stützen,
- Fig. 9: den Unterbau eines erfindungsgemässen Rollstuhls mit komplett eingefahrener Stütze in einer bevorzugten Ausführungsform,
- Fig. 10: den Unterbau des Rollstuhls der Fig. 9 mit ausgefahrener Stütze,
- Fig. 11: die Stütze der Ausführungsform der Fig. 9 als separates Detail, zusammen mit dem Antrieb und den Befestigungslaschen,
- Fig. 12: die Stütze der Ausführungsform der Fig. 10 als separates Detail, zusammen mit dem Antrieb und den Befestigungslaschen, in teilweise ausgefahrener Stellung, und
- Fig. 13: schematisch die erfindungswesentlichen Elemente des Rollstuhls und deren Verbindung.

Es handelt sich hier um einen selbstbalancierenden Rollstuhl mit dem erfindungsgemässen Stützsystem, d.h. mit einer zusätzlich aktivierbaren mechanischen Abstützung, um ein Umkippen bei Deaktivierung des Antriebssystems 14 oder bei anderen außergewöhnlichen Fahrzuständen durch rasches automatisches Ausfahren von Abstützelementen 5 zu verhindern und gleichzeitig auch nach manueller Ansteuerung das Überwinden von Hindernissen zu erleichtern bzw. überhaupt erst zu ermöglichen oder manuell ein langsames Ausfahren der Abstützelemente 5 zu gestatten. In gleicher Weise ist die Erfindung aber auch bei anderen, gleichartig konstruierten Fahrzeugen anwendbar.

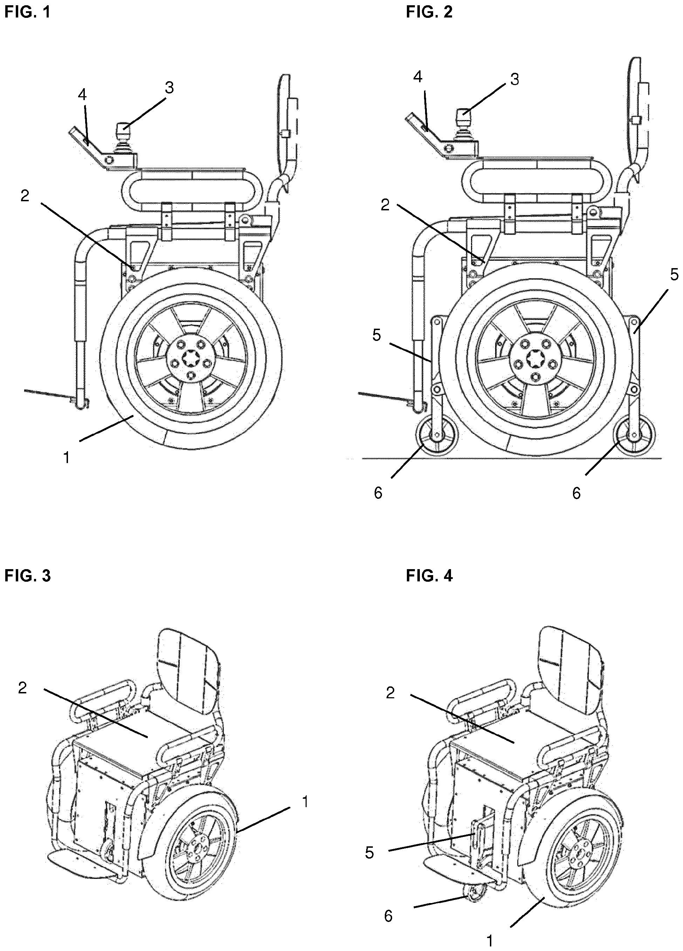

Die zwei motorisch angetriebenen Räder 1 sind über eine Steuereinrichtung 13 für die Balance gegenüber einer vertikalen Achse, den Antrieb 14 und die Steuerung des Rollstuhls betätigbar, welche Steuereinrichtung 13 an oder in der tragenden Struktur 2 des Rollstuhls, an welcher auch die Sitzfläche, Rückenlehne und alle weiteren Elemente angebracht sind. Zusätzlich sind, wie in Fig. 1 und 2 zu erkennen, ein Joystick 3 und/oder eine Tastatur 4 als Eingabevorrichtungen für Steuerbefehle des Benutzers an die Steuereinrichtung vorhanden. Die Neigung des Rollstuhls gegenüber der Vertikalen wird über einen ebenfalls mit der Steuereinrichtung verbundenen Beschleunigungs- und/oder Lagesensor 12 ermittelt. Zusätzlich können weitere Sensoren 15 für Beschleunigungen, Geschwindigkeit, räumliche Lage, etc. vorhanden und mit der Steuereinrichtung verbunden sein.

Weiters sind ausfahrbare Stützen 5 vorhanden, vorzugsweise zumindest je eine Stütze 5 vor und hinter den angetriebenen Rädern 1. Diese Stützen 5 können mittels eines separaten Antriebs 10 in zumindest einige Positionen zwischen einer komplett eingefahrenen und einer komplett ausgefahrenen Stellung, wie beispielsweise in den Fig. 2 und 4 zu sehen, verfahren werden. Die Stützen 5 sind vorzugsweise mit einem Bodenkontaktelement, beispielsweise einem Stützrad 6 oder einer Gleitkufe, versehen.

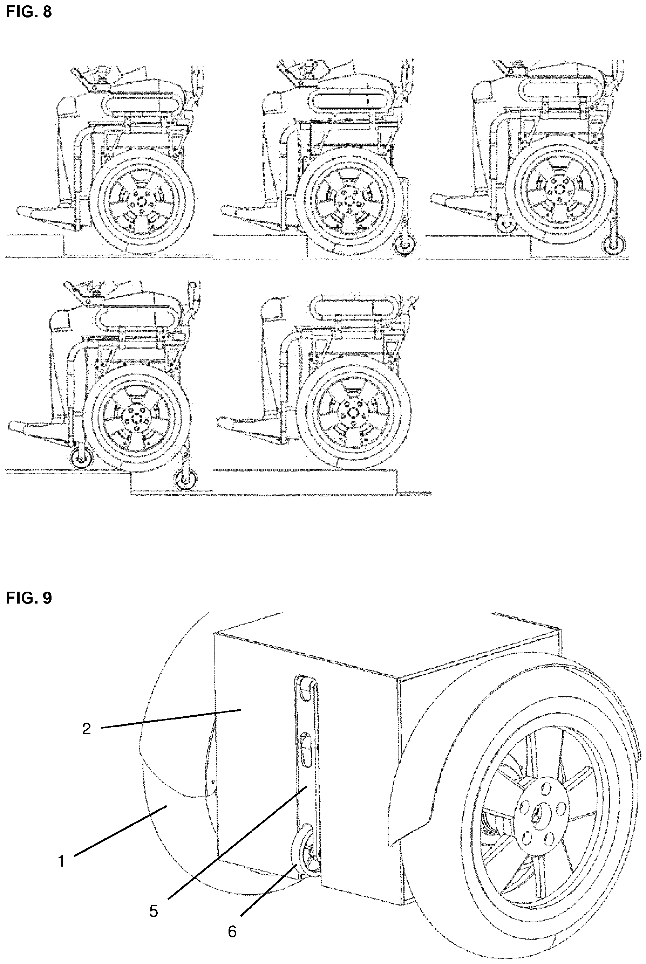

Eine konkrete vorteilhafte Ausführungsform für die Stützen 5 und deren Anlenkung am Rollstuhl sowie deren Antrieb für ein sowohl langsames Ausfahren im Normalbetrieb als auch besonders schnelles Ausfahren als Notabstützung wird nachfolgend unter Bezug auf die Fig. 9 bis 12 erläutert.

Die Fig. 9 zeigt eine Stütze 5 in der vorteilhaften Ausführungsform in komplett in der tragenden Struktur 2 des Fahrzeuges eingefahrener Stellung. Das als Rad 6 ausgeführte Bodenkontaktelement ist soweit zurückgezogen, dass es möglichst vollständig innerhalb der Begrenzungen der tragenden Struktur 2 liegt und die Neigung und andere Bewegungen des Rollstuhls nicht behindert.

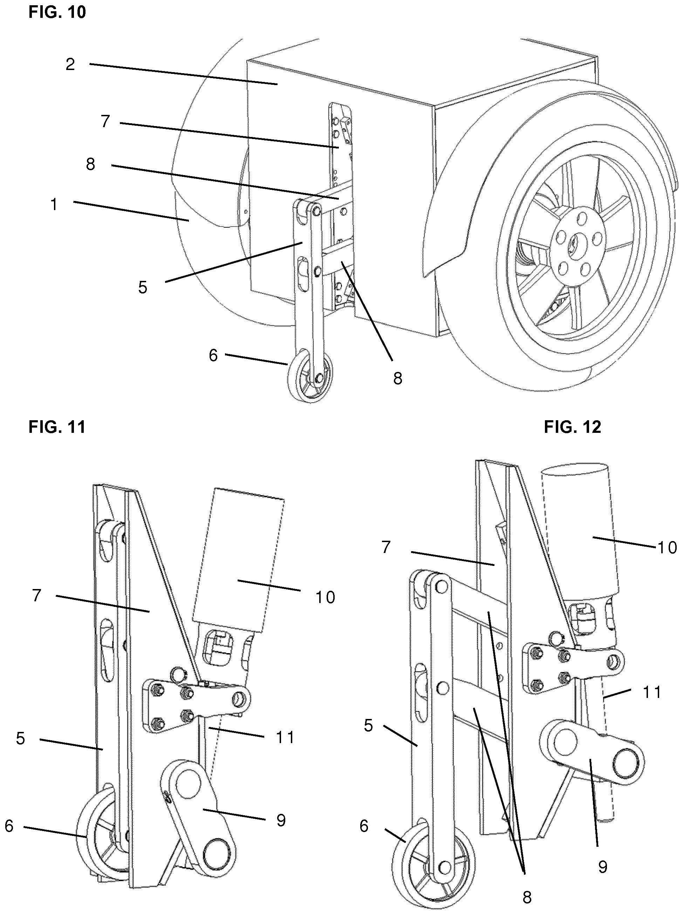

Die Fig. 10 hingegen zeigt die Stütze 5 in fast vollständig ausgefahrener Stellung, in welcher das Rad 6 Bodenkontakt hat oder kurz vor Kontakt mit dem Untergrund steht. Im Aufnahmeschlitz der tragenden Struktur 2 des Rollstuhls sind die Befestigungslaschen 7 für die Stützanordnung 5, 6, 8, 9, 10, 11 zu erkennen, ebenso wie die vorzugsweise parallelen und vorzugsweise gleich langen Lenker 8 einer Parallelogramm-Aufhängung der Stütze 5, die verschwenkbar an den Befestigungslaschen 7 angelenkt sind. Die Schwenkachsen sind dabei im Wesentlichen parallel zur Achse des Rades 6 am bodenseitigen Ende der Stütze 5. Eine der beiden Lenker 8, vorzugsweise der untere Lenker, setzt sich an der Aussenseite der Befestigungslaschen 7 vorzugsweise in gerader Linie in zumindest einem Antriebshebel 9 fort. Vorteilhafterweise sind an beiden Seiten der Achse des unteren Lenkers 8 parallele Antriebshebel 9 vorhanden, an deren vorzugsweise miteinander querverbundenen Enden ein Antriebselement zur Verschwenkung der Antriebshebel 9 und damit der gesamten Parallelogramm-Anordnung 5, 8, 9 angreift. Dieses Antriebselement ist im dargestellten bevorzugten Ausführungsbeispiel eine Gewindespindel 11 eines elektronisch über die Stützsteuereinrichtung ansteuerbaren Antriebsmotors 10. Dieser Antriebsmotor 10 ist ebenfalls an den Befestigungslaschen 7 oder an daran vorgesehenen Verlängerungen schwenkbar befestigt, um den Bewegungen der Gewindespindel 11 und des Antriebshebels 9 zu folgen.

Bei entsprechend starker und dynamischer Auslegung des Antriebsmotors 10 kann, verstärkt über die Parallelogramm-Hebelanordnung von Stütze 5, Lenker 8 und Antriebshebel 9 die gewünschte hochdynamische Notabstützfunktion als auch bei entsprechend langsamer Ansteuerung ein Normalbetrieb mit langsamem Ausfahren der Stütze 5 realisieren. Dazu ist auch eine entsprechende Auslegung betreffend die Drehzahl des Antriebsmotors 10 in Verbindung mit der Steigung der Gewindespindel 11 nötig, die aber auch eine Übersetzung gewährleisten soll, um die erforderliche Kraft für das Anheben des Rollstuhls samt Benutzer aufzubringen, wenn etwa mit Hilfe der Abstützeinrichtung Hindernisse überwunden werden sollen.

Die Hauptsteuereinrichtung 13, welche die Räder 1 ansteuert, beinhaltet eine Stützsteuereinrichtung 16 oder ist mit einer derartigen separaten Einrichtung verbunden und ist weiters derart ausgelegt, dass von ihren Steuersignalen und Kontrollsignalen für die Balance, den Antrieb und die Steuerung des Rollstuhls zumindest auch ein Teil an die Stützsteuereinrichtung 16 übergeben wird. Die Eingabevorrichtungen 3, 4 können auch direkt die Stützsteuereinrichtung 16 ansprechen, welche somit in Abhängigkeit von den Steuersignalen, Kontrollsignalen und allfälligen Steuerbefehlen die Stützen 5 zumindest teilweise auszufahren bzw. wieder einzufahren.

Ein erster Betriebsmodus des Rollstuhls mit der erfindungsgemässen Stützeinrichtung sieht eine derartige Auslegung der Steuereinrichtung vor, dass auf Anweisung des Benutzers an die Steuereinrichtung über beispielsweise die Tastatur 4 diese durch Aktivierung des Antriebs für die Stützen 5 diese in einer relativ langsamen Bewegung innerhalb von wenigen Sekunden ausfährt. An den Stützen 5 oder am Rollstuhl selbst sind Sensoren angebracht, die eine Bodenberührung der Stützen 5 bzw. des Bodenkontaktelementes 6 erkennen bzw. welche den Abstand dieser Elemente bis zum Boden ermitteln und an die Stützsteuereinrichtung 16 senden können. Die Stützen 5 fahren nun soweit aus, bis diese Sensoren Bodenkontakt feststellen und das Fahrzeug somit nach Deaktivierung der Hauptsteuereinrichtung weiter einen stabilen Stand erreicht. Die beiden Stützen 5 werden vorzugsweise separat angesteuert, wodurch Unebenheiten ausgeglichen werden können.

Ein anderer, alternativ oder zusätzlich in den Steuereinrichtungen implementierter Betriebsmodus sieht vor, dass das Stützsystem auch vom Fahrzeug selbst ohne Benutzereingabe ausgefahren werden kann. Erkennt die Hauptsteuereinrichtung 13 einen kritischen Zustand wie z.B. zu niedrigen Ladestand der Akkus, so bringt diese Hauptsteuereinrichtung 13, unabhängig von einer Benutzereingabe, das Fahrzeug zum Stillstand und gibt ein Signal an die Stützsteuereinrichtung 16, welche dann das Antriebssystem der Stützen 5 aktiviert und diese automatisch ausfährt, bis ein stabiler Stand sichergestellt ist.

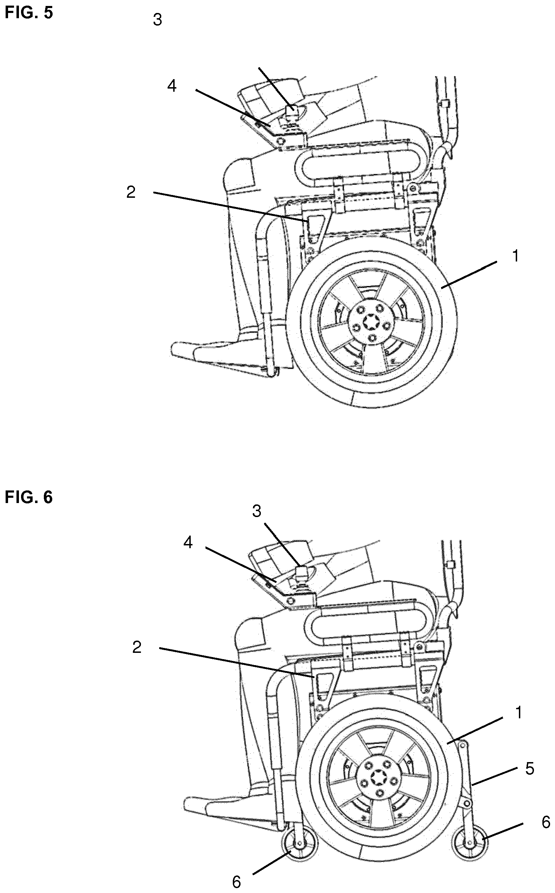

Ein weiterer, alternativ oder zusätzlich in den Steuereinrichtungen 13, 16 implementierter Betriebsmodus ist als Notfall-Modus ausgelegt. In diesem Modus wird das Stützsystem innerhalb weniger Zehntelsekunden automatisch ausgelöst. Läuft das Fahrzeug z.B. durch Traktionsverlust, Motorüberlast, etc. Gefahr, nicht mehr sicher seine Balance aufrecht halten zu können, so gibt die Hauptsteuereinrichtung 13 ein entsprechendes Signal an die Stützsteuereinrichtung 16. Diese fährt dann innerhalb weniger Zehntelsekunden die Stützen 5 aus, unabhängig ob sich das Fahrzeug im Stillstand oder, wie in Fig. 5 dargestellt, in Fahrt befindet. Aus diesem Grund ist die Auslegung der Bodenkontaktelemente als Stützräder 6 vorteilhaft, um damit auch ein Rollen im abgestützten Zustand, wie in Fig. 6 zu sehen, zu ermöglichen.

Nach Ausfahren der Stützeinrichtung schaltet die Hauptsteuereinrichtung 13 den dynamischen Balance-Modus ab. Der Rollstuhl wird nun von dem Stützsystem aufrecht gehalten. Gebremst wird das Fahrzeug über die das Antriebssystem 14 der Räder 1.

Vorteilhafterweise ist zwischen der Hauptsteuereinrichtung 13 und der Stützsteuereinrichtung 16 ein Watchdog 17 ausgeführt. D.h. es wird in kurzen Abständen bzw. hoher Taktzahl zwischen beiden Steuereinrichtungen 13, 16 ein "alles OK" Signal geschickt. Weist z.B. die Hauptsteuereinrichtung 13 einen Defekt auf, so wird dieser Watchdog 17 unterbrochen und die Steuereinrichtung 16 des Stützsystems fährt die Stützen 5 im Not-Modus aus. Dies soll einen Sturz verhindern.

Ein weiterer, alternativ oder zusätzlich in den Steuereinrichtungen implementierter Betriebsmodus ermöglicht es dem Nutzer, auf Untergründen zu fahren, welche aufgrund ihrer Beschaffenheit für ein selbstbalancierendes Fahrzeug nicht möglich wären. Will der Nutzer eine eisige Fläche befahren, so stellt sich ein Traktionsverlust als sehr wahrscheinlich dar. Somit schaltet der Nutzer den Rollstuhl bereits vor Befahren der Eisfläche in den Sicherheitsmodus. In diesem Modus verharren die Stützen 5, überwacht von den Sensoren für den Bodenkontakt bzw. die Abstandsermittlung vom Boden, wenige Millimeter oberhalb des Bodens. Die Hauptsteuereinrichtung 13 schaltet dabei vom Balancebetrieb in einen reinen Drehzahlbetrieb. Im Balancebetrieb hält die Steuerung 13 den Rollstuhl dynamisch stabil. Im Drehzahl Betrieb wird das Fahrzeug durch die Stützräder stabil gehalten und die Antriebsmotoren 14 setzen lediglich die Benutzereingabe um, damit ein Vorwärts- und Rückwärts-Fahren sowie ein Lenken möglich ist. Das Fahrzeug kann somit wenige Grade nach vor und zurück kippen, jedoch nicht umfallen. Balancealgorithmen der Hauptsteuereinrichtung 13 sind deaktiviert.

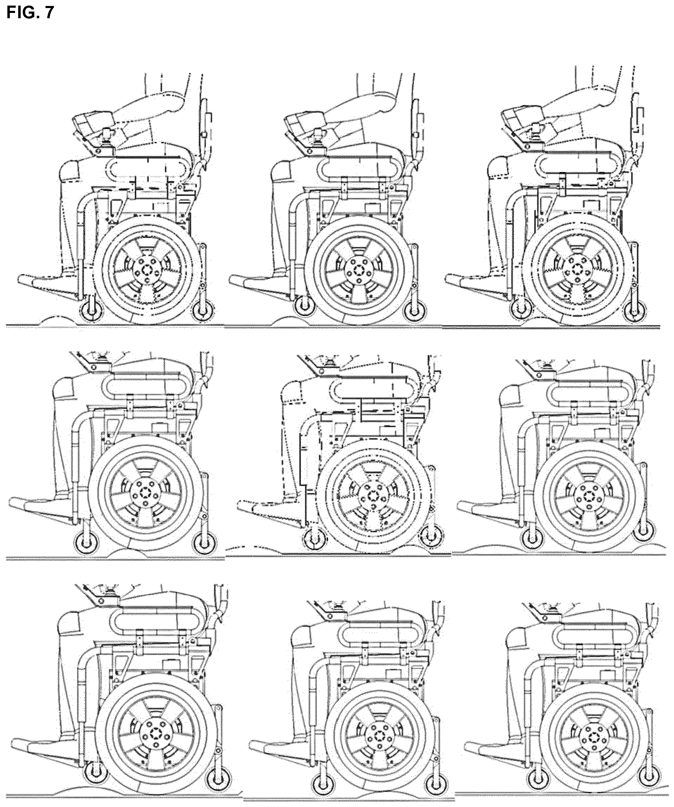

Ein weiterer, alternativ oder zusätzlich in den Steuereinrichtungen implementierter Betriebsmodus sieht vor, das Fahrzeug mittels der Hauptsteuereinrichtung 13 dynamisch stabil zu halten und zu steuern. Sensoren erkennen den Abstand zwischen den Stützen 5 bzw. deren Bodenkontaktelementen und dem Untergrund. Die beispielsweise Stützräder 6 werden zur erweiterten Sicherheit bereits bis unmittelbar vor dem Untergrund ausgefahren. Mittels der Sensoren wird ständig der Abstand zwischen den Stützrädern 6 und Untergrund ermittelt und die Stützräder 6 dynamisch in einer Position unmittelbar vor dem Untergrund gehalten. Dies ist beispielsweise in der Abfolge von Abbildungen der Fig. 7 dargestellt.

Kommt der Rollstuhl dabei in einen kritischen Fahrzustand wie z.B. Traktionsverlust, so können die Stützen 5 das Fahrzeug unmittelbar abstützen und aufrecht halten. Die Fahrt muss in diesem Modus nicht zwingend unterbrochen werden. Dieser Modus findet Verwendung bei kritischen Untergründen wie z.B. Matsch, nasser Wiese, Buckelpiste, etc.

Ein weiterer, alternativ oder zusätzlich in den Steuereinrichtungen 13, 16 implementierter Betriebsmodus ist dafür vorgesehen, um Hindernisse zu überwinden, welche im normalen Fahrmodus nicht mehr möglich wären. So kann das Fahrzeug bei z.B. Gehsteigkanten einer bestimmten Höhe, abhängig vom Reifendurchmesser und der Antriebsleistung der Räder 1, an seine Grenzen kommen, die allein im Normalbetrieb ein sicheres Überwinden einer solchen Gehsteigkante nicht mehr gestatten.

Der vorteilhafte Betriebsmodus sieht nun vor, dass nach dem Heranfahren an das Hindernis mindestens eine der Stützen 5 bis auf Bodenkontakt ausfahren. Vorzugsweise werden die Stützen 5 vor als auch hinter den Rädern 1 des Rollstuhls aktiviert. Nun treiben die Antriebsmotoren der Räder 1 das Fahrzeug gegen das Hindernis und gleichzeitig wird der Antrieb der Stützen 5 weiter aktiviert, um die Stützen 5 stark nach unten zu drücken und so Fahrzeug zumindest mit anzuheben oder allein über die Stützen 5 anzuheben. Diese zusätzliche Hubwirkung der Stützen 5 ermöglicht es somit größere Hindernisse zu überwinden. Die Abfolge von Abbildungen der Fig. 8 zeigt diesen Modus.

Schliesslich können auch noch vorteilhafterweise alternativ oder zusätzlich die Steuereinrichtungen derart ausgelegt sein, um einen Schiebemodus zu realisieren. In diesem Modus werden die Stützen 5 bis kurz vor dem Untergrund ausgefahren und der Antrieb der Räder 1 abgeschaltet. Somit ist ein Schieben des Rollstuhls möglich.

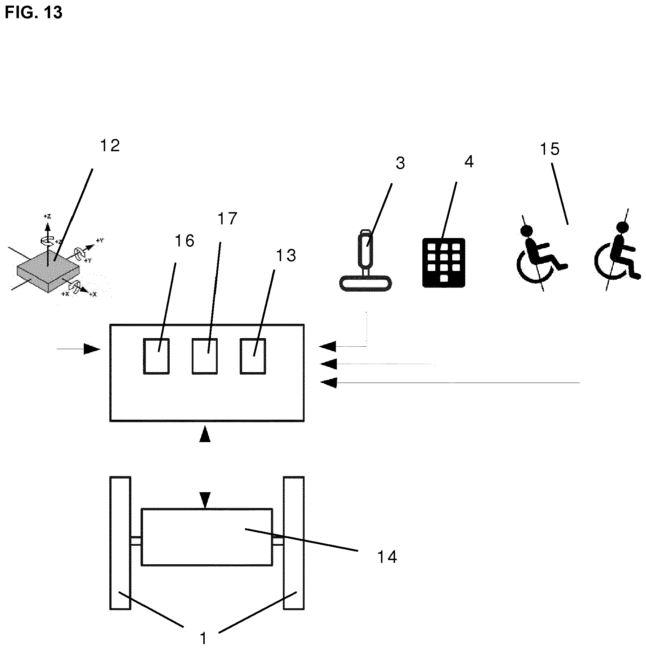

Fig. 13 zeigt noch in schematischer Darstellung die erfindungswesentlichen Elemente sowie symbolisiert durch Pfeile deren Verbindung, wobei durch die Pfeilrichtung auch die Richtung der Signalübermittlung angedeutet ist. Während von den Eingabevorrichtungen 3, 4 bzw. vom Beschleunigungssensor 12 oder weiteren Sensoren, wie etwa dem Lagesensor 15, der Fluss von Steuersignalen hin zu den Steuereinrichtungen 13, 16 läuft (abgesehen von allfälligen haptischen oder sonstigen Rückmeldungen an die Eingabevorrichtungen oder separate Anzeigeeinrichtungen), ist zwischen den Steuereinrichtungen 13, 16 und dem Antrieb 14 der Räder 1 bzw. dem Antrieb 10 für die Stützen ein Steuer- und Signalfluss in beiden Richtungen vorgesehen. Ebenfalls zu erkennen ist die Watchdog-Schaltung 17 zur Überwachung der Kommunikation zwischen den Steuereinrichtungen 13, 16.

### Bezugszeichen liste

- 1: Räder
- 2: Tragende Struktur
- 3: Joystick
- 4: Tastatur
- 5: Stütze
- 6: Rad
- 7: Befestigungslaschen
- 8: Lenker
- 9: Antriebshebel
- 10: Antriebsmotor
- 11: Gewindespindel
- 12: Beschleunigungssensor
- 13: Hauptsteuereinrichtung
- 14: Antrieb
- 15: Lagesensor
- 16: Stützsteuereinrichtung
- 17: Watchdog-Schaltung

## Patentansprüche

1. Elektronisch selbstbalancierter Rollstuhl, der mit mindestens zwei motorisch angetriebenen Rädern (1) und einer für die Balance, den Antrieb und die Steuerung des Rollstuhls zuständigen Hauptsteuereinrichtung (13) für die motorisch angetriebenen Räder (1) im Balance- und/oder Drehzahlmodus sowie einem Stützsystem ausgestattet ist, das Stützsystem umfassend mindestens eine erste Stützeinrichtung (5, 6), die in zumindest einige Positionen zwischen einer komplett eingefahrenen und einer komplett ausgefahrenen Stellung verfahrbar ist, wobei die Stützeinrichtung mit einem Bodenkontaktelement (6) sowie einem Antrieb (10) für das Verfahren der Stützeinrichtung (5, 6) versehen ist, wobei die Hauptsteuereinrichtung (13) eine Stützsteuereinrichtung (16) beinhaltet und die Hauptsteuereinrichtung (13) ausgelegt ist, um zumindest einen Teil von deren Steuersignalen und Kontrollsignalen für die Balance, den Antrieb und die Steuerung des Rollstuhls auch an die Stützsteuereinrichtung (16) zu übergeben,
wobei gegebenenfalls Bedienungselemente (3, 4) zur direkten Eingabe von Steuerbefehlen in die Stützsteuereinrichtung (16) am Stützsystem oder am Rollstuhl positioniert sind, und wobei die Stützsteuereinrichtung ausgelegt ist, um in Abhängigkeit von den Steuersignalen, Kontrollsignalen und allfälligen Steuerbefehlen zumindest eine Stützeinrichtung (5, 6) zumindest teilweise auszufahren bzw. wieder einzufahren, **dadurch gekennzeichnet, dass** die Stützeinrichtung (5, 6) ein als Rad (6) ausgeführtes Bodenkontaktelement und Lenker (8) umfasst, die eine Parallelogramm-Aufhängung einer Stütze (5) ausbilden, an deren bodenseitigem Ende die Achse des als Rad (6) ausgeführten Bodenkontaktelements angeordnet ist, wobei ein Antriebselement (11) Verschwenkung der Parallelogramm-Aufhängung (5, 8, 9) vorgesehen ist.

2. Rollstuhl nach Anspruch 1, **dadurch gekennzeichnet, dass** der Rollstuhl eine tragende Struktur (2) aufweist, wobei das als Rad (6) ausgeführte Bodenkontaktelement in der eingefahrenen Stellung soweit zurückgezogen ist, dass es im Wesentlichen vollständig innerhalb der Begrenzungen der tragenden Struktur (2) liegt und die Neigung und andere Bewegungen des Rollstuhls nicht behindert, und dass die tragende Struktur Befestigungslaschen (7) für die Stützenanordnung (5, 6, 8, 9, 10, 11) sowie die Lenker (8) der Parallelogramm-Aufhängung der Stütze (5) aufweist, die um Schwenkachsen verschwenkbar an den Befestigungslaschen (7) angelenkt sind, wobei die Schwenkachsen im Wesentlichen parallel zur Achse des Rades (6) am bodenseitigen Ende der Stütze (5) angeordnet sind, wobei einer der beiden Lenker (8), vorzugsweise der untere Lenker, sich an der Außenseite der Befestigungslaschen (7) vorzugsweise in gerader Linie in zumindest einem Antriebshebel (9) fortsetzt, an dessen Ende das Antriebselement zur Verschwenkung des zumindest einen Antriebshebels (9) und damit der gesamten Parallelgramm-Anordnung (5, 8, 9) angreift.

3. Rollstuhl nach Anspruch 1 oder 2, **dadurch gekennzeichnet, dass** der untere Lenker (8) sich an der Außenseite der Befestigungslaschen (7) in gerader Linie an beiden Seiten der Achse des unteren Lenkers (8) in parallelen Antriebshebeln (9) fortsetzt, an deren miteinander querverbundenen Enden das Antriebselement angreift.

4. Rollstuhl nach Anspruch 3, **dadurch gekennzeichnet, dass** das Antriebselement eine Gewindespindel (11) eines elektronisch über die Stützsteuereinrichtung ansteuerbaren Antriebsmotors (10) ist.

5. Rollstuhl nach Anspruch 4, **dadurch gekennzeichnet, dass** der Antriebsmotor (10) an den Befestigungslaschen (7) oder an daran vorgesehenen Verlängerungen schwenkbar befestigt, um den Bewegungen der Gewindespindel (11) und des Antriebshebels (9) zu folgen.

6. Rollstuhl nach einem der Ansprüche 1 bis 5, **gekennzeichnet durch** eine von der Hauptsteuereinrichtung unterschiedene Stützsteuereinrichtung, sowie eine Schnittstelle zur Verbindung der Hauptsteuereinrichtung und der Stützsteuereinrichtung, wobei die Schnittstelle ausgelegt ist, um aus der Hauptsteuereinrichtung zumindest einen Teil von deren Steuersignalen und Kontrollsignalen für die Balance, den Antrieb und die Steuerung des Rollstuhls auch an die Stützsteuereinrichtung zu übergeben.

7. Rollstuhl nach einem der Ansprüche 1 bis 6, **gekennzeichnet durch** zumindest zwei Stützeinrichtungen (5, 6), wobei zumindest ein Bodenkontaktelement (6) einer Stützeinrichtung (5, 6) in Fahrtrichtung gesehen vor der Achse und zumindest ein weiteres Bodenkontaktelement (6) einer weiteren Stützeinrichtung (5, 6) hinter der Achse angeordnet ist, wobei vorzugsweise die Stützsteuereinrichtung das Ausfahren der vor und hinter der Achse befindlichen Stützeinrichtungen (5, 6) derart abstimmt, dass eine vordefinierte Lage des Rollstuhls zur Vertikalen eingestellt wird.

8. Rollstuhl nach einem der Ansprüche 1 bis 7, **dadurch gekennzeichnet, dass** jedes Bodenkontaktelement (6) mit einer Sensoranordnung zur Rückmeldung von Bodenkontakt und/oder des Abstandes vom Boden verbunden ist.

9. Rollstuhl nach einem der Ansprüche 1 bis 8, **dadurch gekennzeichnet, dass** eine Überwachungsschaltung für die Schnittstelle zur Verbindung der Hauptsteuereinrichtung und der Stützsteuereinrichtung ausgelegt ist, um bei Feststellung einer Störung der ordnungsgemäßen Verbindung die oder jede Stützeinrichtung (5, 6) auszufahren.

10. Rollstuhl nach einem der vorhergehenden Ansprüche, **dadurch gekennzeichnet, dass** zumindest ein Bedienungselement (3, 4) oder eine Stellung eines Bedienungselementes (3, 4) zur direkten Eingabe von Steuerbefehlen in die Stützsteuereinrichtung vorgesehen ist, welches ein rasches Ausfahren der Stützeinrichtungen (5, 6) bis zum Bodenkontakt auslöst.

11. Rollstuhl nach einem der vorhergehenden Ansprüche, **dadurch gekennzeichnet, dass** zumindest ein Bedienungselement (3, 4) oder eine Stellung eines Bedienungselementes (3, 4) zur direkten Eingabe von Steuerbefehlen in die Stützsteuereinrichtung vorgesehen ist, welches ein langsames Ausfahren der Stützeinrichtungen (5, 6) bis zum Bodenkontakt auslöst.

12. Rollstuhl nach Anspruch 11, **dadurch gekennzeichnet, dass** die Hauptsteuereinrichtung ausgelegt ist, um kritische Zustände an die Schnittstelle zu melden und den Rollstuhl zum Stillstand bringt, und die Stützsteuereinrichtung ausgelegt ist, um bei Meldung kritischer Zustände ein langsames Ausfahren der Stützeinrichtungen (5, 6) bis zum Bodenkontakt auszulösen.

13. Rollstuhl nach einem der vorhergehenden Ansprüche, **dadurch gekennzeichnet, dass** die Hauptsteuereinrichtung ausgelegt ist, um kritische Zustände mit Balanceverlust an die Schnittstelle zu melden, und die Stützsteuereinrichtung ausgelegt ist, um bei Meldung dieser kritischen Zustände ein schnelles Ausfahren der Stützeinrichtungen (5, 6) bis zum Bodenkontakt auszulösen.

14. Rollstuhl nach einem der vorhergehenden Ansprüche, **dadurch gekennzeichnet, dass** die Hauptsteuereinrichtung ausgelegt ist, um traktionsarme Untergründe zu erkennen, in Drehzahlbetrieb umzuschalten und dies an die Schnittstelle zu melden, und die Stützsteuereinrichtung ausgelegt ist, um bei Meldung traktionsarmer Untergründe ein Ausfahren der Stützeinrichtungen (5, 6) bis kurz vor Bodenkontakt auszulösen.

15. Rollstuhl nach einem der vorhergehenden Ansprüche, **dadurch gekennzeichnet, dass** zumindest ein Bedienungselement (3, 4) oder eine Stellung eines Bedienungselementes (3, 4) zur direkten Eingabe von Steuerbefehlen in die Stützsteuereinrichtung vorgesehen ist, welches ein Ausfahren der Stützeinrichtungen (5, 6) bis kurz vor Bodenkontakt auslöst.

16. Stützsystem nach einem der vorhergehenden Ansprüche, **dadurch gekennzeichnet, dass** zumindest ein Bedienungselement (3, 4) oder eine Stellung eines Bedienungselementes (3, 4) zur direkten Eingabe von Steuerbefehlen in die Stützsteuereinrichtung vorgesehen ist, welches ein langsames Ausfahren der Stützeinrichtungen (5, 6) bis zum Bodenkontakt auslöst und bei weiterer Aktivierung des Antriebs des Rollstuhls auch den Antrieb (10) der Stützeinrichtungen (5, 6) weiter aktiviert.

17. Rollstuhl nach einem der vorhergehenden Ansprüche, **dadurch gekennzeichnet, dass** zumindest ein Bedienungselement (3, 4) oder eine Stellung eines Bedienungselementes (3, 4) zur direkten Eingabe von Steuerbefehlen in die Stützsteuereinrichtung vorgesehen ist, welches ein langsames Ausfahren der Stützeinrichtungen (5, 6) bis kurz vor Bodenkontakt auslöst und anschliessend den Antrieb des Rollstuhls ausschaltet.

## Claims

1. An electronically self-balancing wheelchair which is equipped with at least two motor-driven wheels (1), a main controller (13) for said motor-driven wheels (1) that ensures the wheelchair's balance, drive and steering, in a balance mode and/or a motor speed mode, and a support system, said support system comprising at least a first support means (5, 6) which is displaceable to at least a number of positions between a completely retracted position and a completely extended position, said support means being provided with a ground contact element (6) and a drive (10) for moving said support means (5, 6), said main controller (13) including a support control means (16) and the main controller (13) being configured to transfer at least a part of the steering and control signals thereof for balancing, driving and steering the wheelchair also to the support control means (16), control elements (3, 4) for directly inputting control commands to the support control means (16) being optionally positioned on the support system or on the wheelchair, and the support control means being configured to at least partially extend and retract at least one support means (5, 6) depending on the steering signals, control signals and any control commands, **characterised in that** said support means (5, 6) comprises a ground contact element embodied as a wheel (6) and a steering link (8) that form a parallelogram suspension of a support pole (5) at whose ground-side end the axis of the ground contact element embodied as a wheel (6) is located, a drive element (11) being provided for pivoting said parallelogram suspension (5, 8, 9).

2. The wheelchair according to claim 1, **characterised in that** the wheelchair has a load-bearing structure (2), said ground contact element (6) embodied as a wheel in its retracted position being retracted to such an extent that it is essentially completely within the limits of the load-bearing structure (2) and does not prevent the wheelchair from being tipped or moved in other ways, and **in that** the supporting structure has fixing lugs (7) for the support pole arrangement (5, 6, 8, 9, 10, 11) and the steering links (8) of the parallelogram suspension of the support pole (5) that are hinged to said fixing lugs (7) in a way that they are pivotable around pivot axes, said pivot axes being located essentially parallel to the axis of the wheel (6) at the ground-side end of the support pole (5), one of the two steering links (8), preferably the lower steering link, extending on the outside of the fixing lugs (7), preferably along a straight line, into at least one drive lever (9) at whose end the drive element is engaged in order to pivot said at least one drive lever (9) and thus the entire parallelogram arrangement (5, 8, 9).

3. The wheelchair according to claim 1 or claim 2, **characterised in that** the lower steering wheel (8) extends on the outside of the fixing lugs (7) along a straight line at both sides of the axis of the lower steering wheel (8) to parallel drive levers (9), the drive element engaging with their cross-connected ends.

4. The wheelchair according to claim 3, **characterised in that** the drive element is a threaded spindle (11) of an electronic drive motor (10) that is drivable via said support control means.

5. The wheelchair according to claim 4, **characterised in that** the drive motor (10) is pivotably fixed to the fixing lugs (7) or to the extensions provided on them, in order to follow the movements of the threaded spindle (11) and the drive lever (9).

6. The wheelchair according to any one of the claims 1 to 5, **characterised by** a support control means differentiated from the main controller and an interface for connecting the main controller and the support control means, said interface being configured to transfer at least a part of the steering and control signals for balancing, driving and steering the wheelchair from the main controller also to the support control means.

7. The wheelchair according to any one of the claims 1 to 6, **characterised by** at least two support means (5, 6), at least one ground contact element (6) of one support means (5, 6) being arranged in front of the axis and at least one other ground contact element (6) of another support means (5, 6) being arranged behind the axis, when viewed in the direction of motion, the support control means preferably adjusting the extension of the support means (5, 6) in front of and behind the axis so that a predefined position of the wheelchair in relation to a vertical line is achieved.

8. The wheelchair according to any one of the claims 1 to 7, **characterised in that** each ground contact element (6) is connected to a sensor arrangement to feed back ground contact and/or the distance from the ground.

9. The wheelchair according to any one of the claims 1 to 8, **characterised in that** a monitoring circuit for the interface connecting the main controller and the support control means is configured to extend the or every support means (5, 6) when a disruption of the proper connection is detected.

10. The wheelchair according to any one of the preceding claims, **characterised in that** at least one operating element (3, 4) or one position of an operating element (3, 4) for directly inputting control commands to the support control means is provided, said element or position triggering a rapid extension of the support means (5, 6) until ground contact is established.

11. The wheelchair according to any one of the preceding claims, **characterised in that** at least one operating element (3, 4) or one position of an operating element (3, 4) for directly inputting control commands to the support control means is provided, triggering a slow extension of the support means (5, 6) until ground contact is established.

12. The wheelchair according to claim 11, **characterised in that** the main controller is configured to report any critical situations at the interface and to stop the wheelchair, and the support control means is configured to trigger a slow extension of the support means (5, 6) until ground contact is established when critical situations are reported.

13. The wheelchair according to any one of the preceding claims, **characterised in that** the main controller is configured to report critical situations in which balance is lost to the interface and the support control means is configured to trigger a rapid extension of the support means (5, 6) until ground contact is established, when such critical situations are reported.

14. The wheelchair according to any one of the preceding claims, **characterised in that** the main controller is configured to recognize low-traction grounds, switch into the motor speed operating mode and report that to the interface and the support control means is configured to trigger an extension of the support means (5, 6) until ground contact is almost established when low-traction grounds are reported.

15. The wheelchair according to any one of the preceding claims, **characterised in that** at least one operating element (3, 4) or one position of an operating element (3, 4) for directly inputting control commands into the support control means is provided, said element or position triggering an extension of the support means (5, 6) until ground contact is almost established.

16. The wheelchair according to any one of the preceding claims, **characterised in that** at least one operating element (3, 4) or one position of an operating element (3, 4) for directly inputting control commands into the support control means is provided, said element or position triggering a slow extension of the support means (5, 6) until ground contact is established and, when the wheelchair drive is further activated, also further activates the drive (10) of the support means (5, 6).

17. The wheelchair according to any one of the preceding claims, **characterised in that** at least one operating element (3, 4) or one position of an operating element (3, 4) for directly inputting control commands into the support control means is provided, said element or position triggering a slow extension of the support means (5, 6) until ground contact is almost established and then switches off the wheelchair drive.

## Revendications

1. Fauteuil roulant à équilibrage électronique automatique qui est équipé d'au moins deux roues motorisées (1), d'un dispositif de réglage principal (13) pour lesdites roues motorisées (1) qui assure l'équilibrage, l'entraînement et la conduite du fauteuil roulant, dans un mode d'équilibre et/ou un mode de vitesse, et d'un système de support, ledit système de support comprenant au moins un premier dispositif de support (5, 6) qui est déplaçable dans au moins un certain nombre de positions entre une position entièrement rétractée et une position entièrement déployée, ledit dispositif de support étant muni d'un élément de contact au sol (6) et d'un entraînement (10) pour déplacer ledit dispositif de support (5, 6), ledit dispositif de réglage principal (13) comprenant un dispositif de réglage de support (16) et le dispositif de réglage principal (13) étant configuré pour transférer au moins une partie des signaux de conduite et de commande pour l'équilibrage, l'entraînement et la conduite du fauteuil roulant également au dispositif de réglage de support (16), des éléments de commande (3, 4) pour l'entrée directe de commandes de contrôle dans le dispositif de réglage de support (16) étant éventuellement positionnés sur le système de support ou sur le fauteuil roulant, et le dispositif de réglage de support étant configuré pour au moins partiellement déployer et rétracter au moins un dispositif de support (5, 6) en fonction des signaux de conduite, des signaux de commande et des instructions de contrôle éventuels, **caractérisé en ce que** ledit dispositif de support (5, 6) comprend un élément de contact avec le sol réalisé sous forme d'une roue (6) et un raccord directeur (8) qui forment une suspension en forme de parallélogramme pour une tige de support (5) à l'extrémité côté sol duquel se trouve l'axe de l'élément de contact avec le sol réalisé sous forme d'une roue (6), un élément d'entraînement (11) étant prévu pour faire pivoter ladite suspension en forme de parallélogramme (5, 8, 9).

2. Fauteuil roulant selon la revendication 1, **caractérisé en ce que** le fauteuil roulant présente une structure porteuse (2), ledit élément de contact avec le sol réalisé sous forme d'une roue (6) étant, dans sa position rétractée, rétracté dans une mesure telle qu'il se trouve essentiellement complètement dans les limites de la structure porteuse (2) et n'empêche pas l'inclinaison ou d'autres déplacements du fauteuil roulant, et **en ce que** la structure porteuse présente des taquets de fixation (7) pour le dispositif de tige de support (5, 6, 8, 9, 10, 11) et les raccords directeurs (8) de la suspension en forme de parallélogramme du tige de support (5) qui sont articulées sur lesdites taquets de fixation (7) de manière à pouvoir pivoter autour d'axes de pivotement, lesdits axes de pivotement étant essentiellement arrangés parallèlement à l'axe de la roue (6) à l'extrémité côté sol du tige de support (5), l'un des deux raccords directeurs (8), de préférence le raccord directeur inférieur (8), s'étendant à l'extérieur des taquets de fixation (7), de préférence en ligne droite, à au moins un levier d'entraînement (9) à l'extrémité duquel l'élément d'entraînement est engagé afin de faire pivoter ledit au moins un levier d'entraînement (9) et donc l'ensemble de l'arrangement en forme de parallélogramme (5, 8, 9).

3. Fauteuil roulant selon la revendication 1 ou 2, **caractérisé en ce que** le raccord directeur inférieur (8) s'étend à l'extérieur des taquets de fixation (7) le long d'une ligne droite de part et d'autre de l'axe du raccord directeur inférieur (8) et forme des leviers d'entraînement parallèles (9), l'élément d'entraînement s'engageant avec leurs extrémités interconnectées.

4. Fauteuil roulant selon la revendication 3, **caractérisé en ce que** l'élément d'entraînement est une tige filetée (11) d'un moteur d'entraînement électronique (10) qui peut être entraîné par l'intermédiaire dudit dispositif de réglage de support.

5. Fauteuil roulant selon la revendication 4, **caractérisé en ce que** le moteur d'entraînement (10) est fixé de manière pivotante aux taquets de fixation (7) ou aux extensions prévues sur celles-ci, afin de suivre les mouvements de la tige filetée (11) et du levier d'entraînement (9).

6. Fauteuil roulant selon l'une des revendications 1 à 5, **caractérisé par** un dispositif de réglage de support différencié du dispositif de réglage principal et une interface pour connecter le dispositif de réglage principal et le dispositif de réglage de support, ladite interface étant configurée pour transférer au moins un partie des signaux de conduite et de commande pour l'équilibrage, l'entraînement et la conduite du fauteuil roulant du dispositif de réglage principal également au dispositif de réglage de support.

7. Fauteuil roulant selon l'une des revendications 1 à 6, **caractérisé par** au moins deux dispositifs de support (5, 6), au moins un élément de contact avec le sol (6) d'un dispositif de support (5, 6) étant disposé devant l'axe et au moins un autre élément de contact avec le sol (6) d'un autre dispositif de support (5, 6) étant disposé derrière l'axe, vu dans le sens du mouvement, le dispositif de réglage de support réglant de préférence le déploiement des dispositifs de support (5, 6) devant et derrière l'axe de manière à obtenir une position prédéfinie du fauteuil roulant par rapport à une ligne verticale.

8. Fauteuil roulant selon l'une des revendications 1 à 7, **caractérisé en ce que** chaque élément de contact avec le sol (6) est relié à un dispositif capteur pour renvoyer le contact avec le sol et/ou la distance du sol.

9. Fauteuil roulant selon l'une des revendications 1 à 8, **caractérisé en ce qu'**un circuit de contrôle pour l'interface reliant le dispositif de réglage principal et le dispositif de réglage de support est configuré pour déployer le ou chaque dispositif de support (5, 6) lorsqu'une perturbation de la connexion correcte est détectée.

10. Fauteuil roulant selon l'une des revendications précédentes, **caractérisé en ce qu'**au moins un élément de commande (3, 4) ou une position d'un élément de commande (3, 4) est prévu pour l'entrée directe d'instructions de commande au dispositif de réglage de support, ledit élément ou ladite position déclenchant le déploiement rapide des dispositifs de support (5, 6) jusqu'à ce que le contact avec le sol soit établi.

11. Fauteuil roulant selon l'une des revendications précédentes, **caractérisé en ce qu'**au moins un élément de commande (3, 4) ou une position d'un élément de commande (3, 4) est prévu pour l'entrée directe d'instructions de commande au dispositif de réglage de support, déclenchant le déploiement lent des dispositifs de support (5, 6) jusqu'à ce que le contact avec le sol soit établi.

12. Fauteuil roulant selon la revendication 11, **caractérisé en ce que** le dispositif de réglage principal est configuré pour signaler toute situation critique à l'interface et pour arrêter le fauteuil roulant, et le dispositif de réglage de support est configuré pour déclencher le déploiement lent des dispositifs de support (5, 6), lorsque des situations critiques sont signalées, jusqu'à ce que le contact avec le sol soit établi.

13. Fauteuil roulant selon l'une des revendications précédentes, **caractérisé en ce que** le dispositif de réglage principal est configuré pour signaler les situations critiques dans lesquelles l'équilibre est perdu à l'interface, et le dispositif de réglage de support est configuré pour déclencher le déploiement rapide des dispositifs de support (5, 6), lorsque de telles situations critiques sont signalées, jusqu'à ce que le contact au sol soit établi.

14. Fauteuil roulant selon l'une des revendications précédentes, **caractérisé en ce que** le dispositif de réglage principal est configuré pour reconnaître les sols à traction faible, passer en mode de fonctionnement à vitesse et signaler cela à l'interface, et le dispositif de réglage de support est configuré pour déclencher le déploiement des dispositifs de support (5, 6), lorsque des sols à traction faible sont signalés, jusqu'à ce que le contact au sol soit presque établi.

15. Fauteuil roulant selon l'une des revendications précédentes, **caractérisé en ce qu'**au moins un élément de commande (3, 4) ou une position d'un élément de commande (3, 4) est prévu pour l'entrée directe d'instructions de commande au dispositif de réglage de support, ledit élément ou ladite position déclenchant le déploiement des dispositifs de support (5, 6) jusqu'à ce que le contact avec le sol soit presque établi.

16. Fauteuil roulant selon l'une des revendications précédentes, **caractérisé en ce qu'**au moins un élément de commande (3, 4) ou une position d'un élément de commande (3, 4) est prévu pour l'entrée directe d'instructions de commande au dispositif de réglage de support, ledit élément ou ladite position déclenchant le déploiement lent des dispositifs de support (5, 6) jusqu'à ce que le contact avec le sol soit établi et, lorsque l'entraînement du fauteuil roulant est à nouveau activé, activant également à nouveau l'entraînement (10) des dispositifs de support (5, 6).

17. Fauteuil roulant selon l'une des revendications précédentes, **caractérisé en ce qu'**au moins un élément de commande (3, 4) ou une position d'un élément de commande (3, 4) est prévu pour l'entrée directe d'instructions de commande au dispositif de réglage de support, ledit élément ou ladite position déclenchant le déploiement lent des dispositifs de support (5, 6) jusqu'à ce que le contact avec le sol soit presque établi et, ensuite, désactivant l'entraînement du fauteuil roulant.
